# EUROPÄISCHE PATENTSCHRIFT

(11) **EP 3 835 071 B1**
(45) Veröffentlichungstag und Bekanntmachung des Hinweises auf die Patenterteilung: **02.11.2022**
(21) Anmeldenummer: 20212935.9
(22) Anmeldetag: 10.12.2020
(51) Int. Cl.: B41M 1/34, B41M 5/00, C03C 17/00, C09D 5/00, H01B 1/22

(54) **SILBERPASTE UND DARAUS HERGESTELLTE BESCHICHTUNGEN**
SILVER PASTE AND COATINGS MADE THEREFROM
PÂTE D'ARGENT ET REVÊTEMENTS FABRIQUÉS À PARTIR DE CELLE-CI

(30) Priorität: 12.12.2019 DE 102019008616
(43) Veröffentlichungstag der Anmeldung: 16.06.2021
(73) Patentinhaber: Merck Patent GmbH, 64293 Darmstadt (DE)
(72) Erfinder: Kilian, Anja, 64293 Darmstadt (DE); Mallig, Lydia, 64293 Darmstadt (DE); Lim, Khwan, Singapore 118222 (SG)

(56) Entgegenhaltungen:
- CN-A- 109 509 568
- US-A1- 2001 018 483
- US-A1- 2016 190 360

## Beschreibung

Die vorliegende Erfindung betrifft eine oxidationsstabile Silberpaste enthaltend Nanosilberteilchen sowie die Verwendung einer solchen Paste zur Herstellung metallisch glänzender Dekorelemente auf Gegenständen mit einer äußeren silikatischen Oberfläche wie Porzellan, Keramik, Knochenporzellan, Glas oder Emaille, metallische Beschichtungen auf solchen Substraten und ein Verfahren zur Herstellung derartiger Beschichtungen.

Dekorative metallische Beschichtungen sind für verschiedene Konsumgüter und architektonische Dekorelemente sehr erwünscht. Insbesondere mit Edelmetallen wie Gold, Palladium und Platin eingefärbte Dekorelemente verleihen solchen Gütern das Gefühl von Wert und Exklusivität.

In der Regel bestehen edelmetallhaltige Zubereitungen zum Dekorieren von Glas, Porzellan, Knochenporzellan, Keramik oder ähnlichen Oberflächen aus Flüssen, Bindemittel und Lösungen von organischen Gold-, organischen Palladium- und/oder organischen Platinverbindungen, die in geeigneten organischen Lösemitteln gelöst sind. Derartige Zusammensetzungen zeigen eine gute Haftung auf dem jeweiligen Untergrund. Nach ihrem Aufbringen auf die Substratoberfläche wird die Metallpaste thermisch behandelt und zersetzt sich zu den entsprechenden Metalloxiden und/oder Metallen, die auf dem Substrat haften und je nach den Ausgangsverbindungen einen glänzenden oder seidenmatten optischen Eindruck der Oberflächendekorationen von Gold- oder Platinfarbe zeigen. Die Verwendung von Edelmetallverbindungen wie organische Goldverbindungen, organische Palladiumverbindungen und organische Platinverbindungen zur Erzeugung von platinfarbigen Effekten ist allerdings sehr kostspielig.

Silberverbindungen eignen sich zwar zur Verwendung als Ausgangsmaterial für die Herstellung von dekorativen Platineffekten auf silikatischen Oberflächen, aber die Zersetzung von organischen Silberverbindungen allein führt nicht zu glänzenden attraktiven silberfarbigen Dekorationen auf silikatischen Oberflächen, da sich definierte metallische Silberfilme oder Silberteilchen nicht ohne unkontrollierte Bildung von dunklem Silberoxid als unerwünschtem Nebenprodukt bilden lassen. Ein weiterer Nachteil dieser silberhaltigen Formulierungen ist, dass diese dann vergrauen und damit an Glanz verlieren. Um eine ausreichende Passivierung zu erhalten, muss gewährleistet sein, dass ein entsprechend hoher SiO₂-Gehalt in der jeweiligen Paste vorliegt. Die Formulierungen aus dem Stand der Technik weisen zudem die Problematik auf, dass die Bindemittel häufig nicht in der Lage sind genügend SiO₂-bildende Stoffe aufzunehmen, ohne dass darunter die Pastenstabilität leidet.

Mit den Metallpräparationen beispielsweise bekannt aus WO 2018/163133 A1 und WO 2018/162550 A1 ist es zwar möglich einen ausreichend hohen SiO₂-Gehalt in der Formulierung zu generieren, allerdings weisen diese Formulierungen keine ausreichende Pastenstabilität auf und können schon nach kurzer Zeit nicht mehr appliziert werden. Mit den Pasten aus dem Stand der Technik erhält man also entweder unzureichend geschützte Metalldekore, d.h. zu geringer Anteil an Glasmatrix zum Schutz der Nanopartikel oder eben nicht hinreichend stabile Pasten, da diese aufgrund des hohen Anteils an SiO₂-Präkursoren zur Glasbildung zu kondensierenden Reaktionen neigen. Diese Reaktionen führen zur Agglomeration der Silbernanopartikel. Weiterhin zeigen die erhaltenen Metalldekore dann eine partikuläre Oberfläche und nicht die gewünschte homogene hochglänzende Beschichtung. Problematisch ist weiterhin, dass die Metalldekore eine nicht ausreichende Haftung auf dem Substrat aufweisen, wenn der SiO₂-Gehalt des Dekors zu gering ist.

Insbesondere von Nachteil ist, dass die aus dem Stand der Technik bekannten metallischen Metalldekore, wenn sie H₂S-haltigen Atmosphären ausgesetzt werden, nicht stabil sind. Werden beispielsweise Dekore in Papier oder Pappe gelagert, gasen diese Dekore kontinuierlich H₂S aus, bedingt durch den Herstellungsprozess des Papiers bzw. der Pappe.

Eine Zusammensetzung enthaltend Silberteilchen, eine Organosilanverbindung, Glasfritte, Lösemittel und Bindemittel ist auch aus der US2016/190360A1 bekannt.

Aufgabe der vorliegenden Erfindung ist daher stabile silberhaltige Pasten bereit zu stellen, die die oben genannten Nachteile nicht aufweisen und zum Beschichten von glasartigen oder keramischen Substraten geeignet sind und, die gleichzeitig nach dem Brennen einen Edelmetall-Effekt ausbilden, wobei die Beschichtung/das Dekor stabil gegen H₂S-haltige und sonstige oxidierende Atmosphären ist. Diese Stabilität setzt voraus, dass beim Brennvorgang eine ausreichend dicke und dichte glasartige Schicht entsteht, welche die Silbernanopartikel umhüllt und auf diese Weise vor Oxidation schützt. Weiterhin muss die Paste so zusammengesetzt sein, dass die Nanopartikel keine Agglomerate bilden bzw. die Agglomeratbildung weitgehend unterdrückt wird. Die Bildung von Agglomeraten beeinflusst negativ den Glanz und den optischen Eindruck der Oberflächendekoration und führt zu Metalldekoren bzw. Metallbeschichtungen mit einer partikulären Oberfläche.

Überaschenderweise wurde jetzt gefunden, dass man stabile Silbernanopartikel-haltige Pasten mit einem hohen Siliziumdioxid-Gehalt herstellen kann, wenn die Paste Silbernanopartikel, ein Naturharz als Bindemittel sowie einen SiO₂-Präkursor enthält. Geeignete Naturharze sind vorzugsweise Harze von Kolophonium, Terpen und der Abietinsäure sowie deren Derivate und Kondensationsprodukte.

Gegenstand der vorliegenden Erfindung ist eine Silberpaste, die
A) 10 bis 40 Gew.-% Nanoteilchen aus Silber oder aus einer silberhaltigen Legierung, wobei die Nanoteilchen einen D₅₀-Wert, gemessen mit dem volumenbezogenen Laserbeugungsverfahren, von 30 - 300 nm aufweisen,
B) 10 bis 30 Gew.-% mindestens einer organischen Verbindung enthaltend Silizium,
C) 30 bis 70 Gew.-% Lösemittel oder eines Lösemittelgemisches,
D) 15 bis 35 Gew.-% mindestens eines Naturharzes,
E) 0 bis 30 Gew.-% mindestens einer organischen Metall-, Erdalkalimetall- oder Alkalimetall-Verbindung, wobei das chemische Element ausgewählt ist aus der Gruppe Ag, Au, Bi, Ca, Co, Cr, Cu, Fe, Ir, K, Mg, Mn, Na, Nb, Ni, Os, Pd, Pt, Os, Rh, Ru, Sn, Ti, W, V, Zn, Zr,
F) 0 bis 10 Gew.% ein oder mehrerer Additive,
G) 0 bis 10 Gew % eines oder mehrerer synthetischer Harze,
enthält,
wobei sich die Prozentangaben auf das Gesamtgewicht der Silberpaste beziehen und 100 % ergeben.

Mit Hilfe der erfindungsgemäßen Silberpaste enthaltend die Komponenten A) bis D) und optional die Komponenten E) und/oder F) und/oder G) ist es möglich kompakte und stabile Beschichtungen auf silikatischen Oberflächen aufzubringen, wobei die Beschichtungen stabil sind und einen sehr hohen metallischen Glanz aufweisen, da eine Agglomeratbildung der Silbernanopartikel weitgehend unterdrückt wird. Damit sind die erfindungsgemäßen Silberpasten hervorragend geeignet als Dekor oder Beschriftungen auf Oberflächen, die beispielsweise aus Porzellan, Knochenporzellan, Keramik, Glas oder Emaille bestehen, da sie neben den optischen Eigenschaften auch eine sehr gute Haftung auf der Oberfläche aufweisen.

Gegenstand der vorliegenden Erfindung ist auch die Verwendung der erfindungsgemäßen Silberpasten zur Beschichtung, zur Herstellung von Dekorelementen oder zur Beschriftung von Gegenständen, die eine Oberfläche aus Porzellan, Knochenporzellan, Keramik, Glas oder Emaille aufweisen.

Wesentlicher Bestandteil der erfindungsgemäßen Metallpräparation sind die Nanoteilchen aus Silber oder einer silberhaltigen Legierung (Komponente A)). Insbesondere bevorzugt bestehen die Nanoteilchen aus einer Silberlegierung, die mindestens 50 Gew.-% Silber, bezogen auf das Gesamtgewicht der Legierung, enthält. Nanopartikel aus Silber sowie Nanoteilchen bestehend aus Silberlegierungen sind beispielsweise kommerziell erhältlich von nanoComposix, SkySpring Nanomaterials, Nano Technology, NTbase, EPRUI Nanoparticles & Microspheres, Chengdu Alpha Nano Technology, Cline Scientific, Nanocs, Sun Innovations, SkySpring Nanomaterials, PV nancel, Dowa.

Geeignete Nanoteilchen weisen einen D₅₀-Wert von 30 - 300 nm, insbesondere 30 - 200 nm und ganz besonders bevorzugt von 50 - 100 nm auf (gemessen mit dem volumenbezogenen Laserbeugungsverfahren bestimmt nach Malvern Instruments Limited) auf.

Vorzugsweise sollten die Nanoteilchen monodispers vorliegen und nicht agglomeriert sein um eine glänzende Filmbildung zu gewährleisten.

In einer besonders bevorzugten Ausführungsform werden stabilisierte Silbernanopartikel eingesetzt. Die Stabilisierung hat die Aufgabe während der Lagerung und der Applikation zu verhindern, dass sich Agglomerate von Nanopartikeln bilden. Für die Ausbildung des Glanzeffektes ist es von Vorteil, wenn die Nanopartikel bis zum Brennvorgang monodispers vorliegen.

Für Silber geeignete Stabilisatoren sind beispielsweise Citrate, wie z.B. Trinatriumcitrat, Kohlehydrate, wie z.B. Glucose, Fructose, Lactose, Saccharose, Polysacharide, Polyvinylpyrrolidon, Natriumdodecylsulfat, Cetyltrimethylammoniumbromid, Carboxymethylcellulose, Polyethylenglycol, Gallsäure, Ölsäure, Polyacrylsäure.

Der Anteil der Stabilisierung beträgt vorzugsweise 0 - 10 Gew.-%, insbesondere 0 - 5 Gew-% und ganz besonders bevorzugt 0 -1 Gew.-%, bezogen auf die Silbernanopartikel.

Der Anteil an der Komponente A) in der Silberpaste beträgt 10 - 40 Gew.-%, insbesondere 10 - 30 Gew.-% und ganz besonders bevorzugt 15 - 25 Gew.-%.

Zur Bildung von SiO₂ als Schutzschicht für die Nanopartikel und als glasbildender Bestandteil (Komponente B)) muss die erfindungsgemäße Silberpaste einen organischen SiO₂-Präkursor enthalten. Alle dem Fachmann bekannten organischen Verbindungen enthaltend Silizium sind geeignet, wie z.B. siliziumhaltige Polymere, Öle oder Harze, Kieselsäureester, sowie Sol-Gel-artige siliziumhaltige Präkursoren. Geeignete Silizium enthaltende Polymere sind beispielsweise Polysiloxane, Polysilazane, Polysilsesquioxane, Polycarbosilane, Polycarbosiloxane, Polysilane, Polysilylcarbodiimide, Polysilsesquicarbodiimide, Polysilsesquiazane, Polyborosilane, Polyborosilazane, Polyborosiloxane und deren Mischungen. Bevorzugt werden Silikone, Polysiloxane, Polysilsesquioxane, Polysilane, Polysilanole oder deren Derivate eingesetzt. Weiterhin können auch Gemische der genannten organischen Verbindungen und Polymere eingesetzt werden.

Die Komponente B) ist vorzugsweise eine Sauerstoff- oder Stickstoff-haltige organische Siliziumverbindung, die bei thermischer Zersetzung in einer sauerstoffhaltigen Atmosphäre ein Si-O-basiertes Netzwerk ausbildet. Um für den vorliegenden Zweck nützlich zu sein, darf die entsprechende Sauerstoff- oder Stickstoff-haltige organische Siliziumverbindung vor ihrer Zersetzung nicht verdampfen. Silizium enthaltende Polymere wie z.B. Polysilazanverbindungen, Polysiloxanverbindungen und Silikonharze der allgemeinen Formeln 1, 2, 3 oder 4 sind besonders vorteilhaft als sauerstoff- oder stickstoffhaltige organische Siliziumverbindung geeignet: 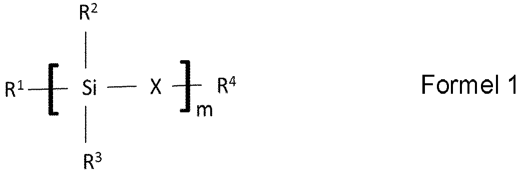 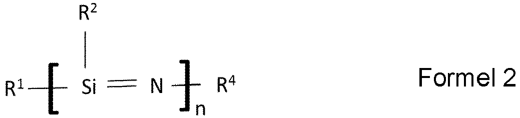 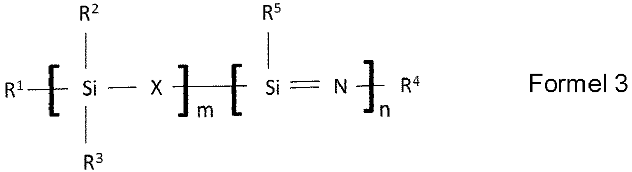 bei denen
- R¹: ein aus der Gruppe bestehend aus H, C₁-C₁₈-Alkyl, C₅-C₆-Cycloalkyl, substituiertem oder unsubstituiertem Phenyl, OH, OC₁-C₁₈-Alkyl, NH₂ und N(C₁-C₁₈-Alkyl)₂ ausgewählter Rest ist;
- R², R³ und R⁵: unabhängig voneinander ein aus der Gruppe bestehend aus H, C₁-C₁₈-Alkyl, OH, OC₁-C₁₈-Alkyl, NH₂, N(C₁-C₁₈-Alkyl)₂, OSi(R¹)₃ und N=SiR¹ ausgewählter Rest sind;
- R⁴: ein aus der Gruppe bestehend aus H, C₁-C₁₈-Alkyl, C₅-C₆-Cycloalkyl, Methacrylat und Phenyl ausgewählter Rest ist;
- X: ein Rest von O oder N ist; und
- m und n: unabhängig voneinander eine ganze Zahl sind, die aus den Zahlen im Bereich von 1 bis 100 ausgewählt ist.

Weiterhin sind auch Silsesquioxanpolymere der allgemeinen Formel 4 vorteilhaft geeignet: 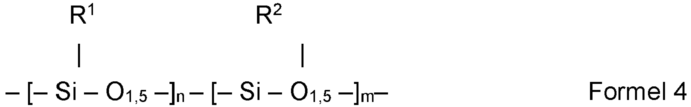 bei denen
- R¹ und R²: gleiche oder voneinander verschiedene Reste sind und aus der Gruppe bestehend aus Wasserstoff, Alkyl, Cycloalkyl, Aryl und Alkoxy ausgewählt sind, und
- m und n: unabhängig voneinander eine ganze Zahl sind, die aus den Zahlen im Bereich von 1 bis 100 ausgewählt ist, sowie Polysilane und Kieselsäureester der Formeln (I) und (II):

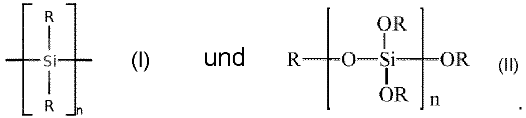

Es versteht sich von selbst, dass die Polymere nicht nur linear, sondern auch zyklisch polymerisiert sein können.

Zu weiteren Silizium enthaltenden Polymeren, die als SiO₂-Präkursor geeignet sind, zählen silikonmodifizierte Alkydharze und Silikonpolyesterharze.

Die Komponente B) ist vorzugsweise eine Verbindung oder ein Polymer ausgewählt aus der Gruppe der Polysilazane, Polysiloxane, Silikone, silikonmodifizierten Alkydharze, Silikonpolyesterharze, Polysilsesquioxane, Polysilane, Polysilanole oder deren Derivate sowie Gemische der genannten organischen Verbindungen und Polymere.

Der Siedepunkt des SiO₂-Präkursors sollte vorzugsweise nicht unterhalb der Brenntemperatur des Dekors liegen. Vorzugsweise sollte der SiO₂-Präkursor so gewählt sein, dass vor dem Brennvorgang eine ausreichende Quervernetzung stattfindet, damit SiO₂-Anteile nicht verdampfen.

Geeignete Silizium enthaltende organische Verbindungen bzw. Polymere sind kommerziell erhältlich unter den Markennamen Silres^{®} (Fa. Wacker), Dowsil^{™} (Fa. Dow Chemicals), Durazan^{™} (Fa. Merck), KF-Reihe (Fa. ShinEtsu) und CoatOSil, SiIFORT, SilForce (Fa. Momentive Performance Materials).

Der Anteil des SiO₂-Präkursors in der Silberpaste beträgt 10 - 30 Gew.-%, insbesondere 12 - 28 Gew.% und ganz besonders bevorzugt 14 - 25 Gew.-% bezogen auf die Silberpaste.

Diese organische(n) Verbindung(en) gemäß Komponente B) wirken als Glasbildner in der resultierenden festen Beschichtung auf einem Substrat, da sie sich bei thermischer Behandlung rückstandslos zu SiO₂-haltigen Gläsern zersetzen.

Nach dem Brand sollte der Gehalt an SiO₂ (Glasmatrix) vorzugsweise 15 bis 45 Gew.-%, insbesondere 20 bis 40 Gew.-%, bezogen auf das Gesamtgewicht der festen Beschichtung betragen.

Die Silberpaste enthält als weiteren Bestandteil 30 bis 70 Gew.-%, vorzugsweise 32 - 65 Gew.-% und insbesondere 35 - 60 Gew.-%, eines Lösemittels oder Lösemittelgemisches (Komponente C)), bezogen auf das Gesamtgewicht der Silberpaste. Die Aufgabe des Lösemittels ist insbesondere das Naturharz zu lösen. Das Lösemittel kann wässrig oder organisch sein abhängig vom eingesetzten Naturharz, vorzugsweise werden organische Lösungsmittel eingesetzt.

Alle dem Fachmann bekannten organischen Lösemittel können zur Herstellung der erfindungsgemäßen Silberpaste verwendet werden, die in der Lage sind, die Naturharze der Komponente D) zu lösen, sich nicht negativ auf die Pastenstabilität auswirken und die bei der Temperatur der thermischen Behandlung der resultierenden Beschichtungsschicht auf dem silikatischen Substrat rückstandsfrei verdampfen. Die Wahl des Lösemittels richtet sich weiterhin nach der Applikationsmethode. Als entscheidende Eigenschaften sind hier die Viskosität und die Verdampfungsrate des Lösemittels zu nennen.

Beispiele für geeignete Lösemittel sind mindestens eines ausgewählt aus der Gruppe Alkohole, aromatische Lösemittel, Ketone, Ester, Ether, Etheralkohole, gesättigte und ungesättigte aliphatische Kohlenwasserstoffe oder Amide. Geeignete Alkohole sind z.B. Ethanol, Isopropanol, Hexanol oder 2-Ethylhexanol, Ethoxyethanol, Methoxyethanol, Methoxypropanol und Gemische davon. Außerdem sind Ether von Polyalkoholen gut geeignet, insbesondere Tripropylenglykolmonomethylether (TPM) und Dipropylenglykolmonomethylether (DPM). Insbesondere bevorzugt sind 2-Ethylhexanol, Tripropylenglykolmonomethylether (TPM) und Dipropylenglykolmonomethylether (DPM). Alle Lösemittel können als alleiniges Lösemittel oder in einem Gemisch, das mehrere Lösemittel enthält, verwendet werden.

Gegebenenfalls können auch nichtalkoholische Lösemittel im Lösemittelgemisch vorhanden sein, beispielsweise, jedoch nicht beschränkt auf, Ether wie Dialkylpropylenglykole, Dioxan oder THF, aromatische Lösemittel wie Xylole, gesättigte und ungesättigte aliphatische Kohlenwasserstoffe wie terpenoische Lösemittel und Naphtha, Amide wie N-Ethylpyrrolidon, Ester wie Ethylbenzoat oder Fettsäureester, in einer Menge von 1 bis zu 40 Gew.-%, bezogen auf das Gewicht des Lösemittelgemisches.

Besonders bevorzugte Lösemittel sind Terpineol, 1-Methoxy-2-propanol (PM), Dipropylenglycolmethylether (DPM), Tripropylenglykolmonomethylether (TPM), Terpentine, Pinene, Pinanol, Borneol, Myrcenol, Dihydrocarveol, Nerol, Geraniol, Linalool und Terpene sowie deren Gemische.

Durch Variieren der Lösemittelmenge und Art kann die Viskosität der Silberpaste gemäß der vorliegenden Erfindung an einen Wert angepasst werden, der für die anwendbare Beschichtungs- oder Drucktechnik nützlich und geeignet ist. Es ist ein großer Vorteil der vorliegenden Erfindung, dass die Silberpaste in mehreren Beschichtungs- oder Drucktechniken verwendet werden kann, wodurch man eine konzentrierte Silberpaste herstellen kann, die durch einfaches Anpassen des Lösemittelgehaltes auf den geforderten Wert verdünnt werden kann und somit für mehrere Beschichtungs- oder Drucktechniken einschließlich Tintenstrahldruck nützlich ist.

Als Bindemittel enthält die erfindungsgemäße Silberpaste 15 bis 35 Gew.-% mindestens eines Naturharzes (Komponente D)). Das Bindemittel trägt dazu bei, die Viskosität der Silberpaste während des Druckprozesses festzulegen. Obwohl die Silberpaste eine Viskosität haben muss, die niedrig genug ist, um in verschiedenen Druck- oder Beschichtungsverfahren bedruckbar oder auftragbar zu sein, muss die jeweilige Beschichtungs- oder Druckschicht nach dem Aufbringen auf dem Substrat formstabil bleiben, ohne sich über die beschichtete Oberfläche hinaus zu verteilen. Diese Eigenschaft ist zwingend erforderlich um scharfe Kanten und Motive zu drucken. Außerdem muss das Bindemittel bei der thermischen Behandlung der resultierenden Beschichtungs- oder Druckschicht auf dem Anwendungsgebiet der vorliegenden Silberpaste vollständig verbrennen. Eine weitere Aufgabe des Bindemittels ist es, die Filmbildung der Silbernanopartikel während des Brennvorgangs zu gewährleisten.

Alle dem Fachmann bekannten Naturharze sind geeignet, insbesondere nicht hydrierte, partiell und/oder vollständig hydrierte Kolophonium basierende Harze, nicht hydrierte, partiell und/oder vollständig hydrierte Kolophoniumester basierende Harze, nicht hydrierte, partiell und/oder vollständig hydrierte Rohtallöl basierende Harze, nicht hydrierte, partiell und/oder vollständig hydrierte Rohtallölester basierende Harze, Terpen basierende Harze und/oder deren jeweilige Derivate sowie Gemische der genannten Harze. Hauptbestandteile der vorgenannten Kolophoniumharze sind Harzsäuren umfassend hauptsächlich Pimarsäure und Abietinsäure. Weiterhin können die Harze teilweise dimerisiert oder polymerisiert sein. Insbesondere bevorzugt besteht das Bindemittel aus einem Kolophonium basierenden Harz.

Als Bindemittel geeignete Harze sind kommerziell erhältlich unter den Markennamen Gum Rosin (Fa. Sigma Aldrich), Dymerex^{™} (Fa. Eastman), Rosin WW (TER Chemicals), Poly-Pale^{™} (Fa. Eastman), Bremar (Fa. Kraemer).

Zur Erhöhung und zur Stabilisierung des Edelmetallfilms z.B. bezüglich Haftung und Kratzfestigkeit, und des Glanzes sowie zur Einstellung des gewünschten Farbtons kann die Silberpaste als optionale Komponente (Komponente E)) 0 bis 5 Gew.-% mindestens einer organischen Metall-, Erdalkalimetall- oder Alkalimetall-Verbindung enthalten, wobei das chemische Element ausgewählt ist aus der Gruppe Ag, Au, Bi, Ca, Ce, Co, Cr, Cu, Fe, Ir, K, Mg, Mn, Na, Nb, Ni, Os, Pd, Pt, Os, Rh, Ru, Sn, Ti, W, V, Zn, Zr.

Bevorzugte organische metallhaltige Verbindungen sind Edelmetalle aus der Gruppe Ag, Au, Pd, Pt, Os, Rh und Ru.

Vorzugsweise werden organische Metallsalze eingesetzt, wie z.B. Resinate, Sulforesinate, Mercaptide, Thiolate, Carboxylate, Ethylhexanoate und Alkoholate. Die organischen Metallsalze werden üblicherweise in einem Lösemittel bzw. Lösemittelgemisch verwendet.

Bevorzugte Lösemittel zum Lösen der organischen Metallkomponente sind die unter Komponente C) angegebenen organischen Lösemittel. Die Metallverbindung der Komponente E) verbessert in der Regel das Anhaften der erfindungsgemäßen Silberpaste an dem Substrat nach dem Brennvorgang. Bei der abschließenden thermischen Behandlung der Silberpaste auf dem beschichteten Substrat wird die organische Metallverbindung zu dem entsprechenden Metalloxid und/oder Metall zersetzt und wirkt somit als Flussmittel. Eine weitere Funktion der Komponente E) ist die Möglichkeit den Farbton des gebildeten Films einzustellen.

Optional kann die erfindungsgemäße Silberpaste für den Verwendungszweck ein oder mehrere Additive (Komponente F)) enthalten, beispielsweise Thixotropiemittel, Verlaufsmittel, Dispergiermittel, Rheologiemodifizierungsmittel, Entschäumer, Tenside, Füllstoffe, Farbstoffe.

Die erfindungsgemäße Silberpaste kann beispielsweise ein Rheologiemodifizierungsmittel enthalten, sofern die Viskosität der Silberpaste auf ganz besondere Weise weiter angepasst werden muss. Das Rheologiemodifizierungsmittel kann in einer Menge von 0 bis 10 Gew.-%, bezogen auf das Gesamtgewicht der Silberpaste, vorhanden sein. Bevorzugt wird eine Menge von 0 bis 8 Gew.-%, insbesondere von 0 bis 5 Gew.-% verwendet. Geeignete Rheologiemodifizierungsmittel sind beispielsweise Kiefernöl, Rizinusöl, Fettsäuren und Fettsäurederivate, natürliche und synthetische Wachse.

Beispiele für Fettsäuren sind Linolsäure, Ölsäure, Stearinsäure, Palmitinsäure, Myristinsäure, Laurinsäure und Caprinsäure sowie deren Derivate.

Beispiele für natürliche und synthetische Wachse sind Montanwachse der C₁₉- bis C₃₀-Kohlenwasserstoffe, Carnaubawachs, Tanwachse, Kolophoniumwachse oder Polyolefinwachse wie beispielsweise Ceridust^{®}-Wachse von Clariant, um nur einige zu nennen.

Geeignete Dispergiermittel sind nicht oberflächenaktive Polymere oder oberflächenaktive Substanzen. Das Dispergiermittel dient dazu, die Filmbildung von Metallteilchen der Komponente A) zu verbessern und ein Absetzen und/oder eine Agglomeration zu verhindern. Hierdurch wird gewährleistet, dass sich während dem Brennprozess ein glänzender Film ausbildet.

Es gibt ein breites Spektrum an nicht oberflächenaktiven Polymeren, die als wirksame Dispergiermittel fungieren können, wie z.B. Polyacrylsäure, Polyacrylate und deren Copolymere, Polyurethane und Polyvinylpyrrolidon.

Als oberflächenaktive Substanz können alle dem Fachmann bekannten Verbindungen eingesetzt werden. Geeignete oberflächenaktive Substanzen können beispielsweise ausgewählt sein aus der Gruppe bestehend aus einem nichtionischen Tensid, einem anionischen Tensid, einem kationischen Tensid und einem amphoteren Tensid und Gemische der genannten Tenside. Alle genannten Tenside enthalten einen nichtpolaren Teil und einen polaren Teil. Der nichtpolare Teil kann aus Gruppen ausgewählt sein, darunter verzweigte, lineare oder aromatische Gruppen, wie einer Alkylgruppe, einer Alkylbenzolgruppe und Kombinationen davon. Der polare Teil der nichtionischen Tenside kann aus der Gruppe bestehend aus einer Alkoholgruppe, einer Ethergruppe, einer Estergruppe, einer Amidgruppe, einer Acrylatgruppe und Kombinationen von mindestens zwei davon ausgewählt sein. Der polare Teil des anionischen Tensids kann aus der Gruppe bestehend aus einem Carboxylat, einem Sulfonat, einem Sulfat, einem Phosphat und Gemischen von mindestens zwei davon ausgewählt sein. Der polare Teil des kationischen Tensids kann beispielsweise eine gegebenenfalls substituierte Ammoniumgruppe sein. Der polare Teil des amphoteren Tensids kann aus Kombinationen von mindestens einem polaren Teil eines kationischen Tensids und eines anionischen Tensids ausgewählt sein.

Zu den beispielhaften nichtionischen Tensiden zählen z.B. langkettige aliphatische Alkohole, ethoxylierte aliphatische Alkohole (wie Octaethylenglykolmonododecylether oder Pentaethylenglykolmonododecylether), Polypropylenglykolalkylether, Glucosidalkylether, Polyethylenglykoloctylphenylether (wie z.B. Triton X-100), Polyethylenglykolalkylphenylether, Glycerinalkylester, Polyoxyethylenglykolsorbitanalkylester, Sorbitanalkylester, Cocamid-MEA, Cocamid-DEA, Dodecyldimethylaminoxid, polyethoxylierte Talgamincarbonsäureester, Polyethylenglykolester, Glykolester von Fettsäuren, Carbonsäureamide, Monoalkanolaminkondensate oder Polyoxyethylenfettsäuream ide.

Zu den beispielhaften anionischen Tensiden zählen: Alkylcarboxylate, wie z.B. Natriumstearat, Alkylsulfate, Alkylbenzolsulfonate, Naphthalinsulfonate, Olefinsulfonate, Alkylsulfonate, sulfatierte natürliche Öle, natürliche Öle und Fette, sulfatierte Ester, Sulfate Alkanolamide, ethoxylierte und sulfatierte Alkylphenole. Zu wichtigen Alkylsulfaten zählen Ammoniumlaurylsulfat, Natriumlaurylsulfat ("SLS" oder "SDS") und die verwandten Alkylethersulfate Natriumlaurethsulfat ("SLES") und Natriummyrethsulfat. Weiterhin geeignet sind Dioctylnatriumsulfosuccinat, Perfluoroctansulfonat, Perfluorbutansulfonat, Alkylaryletherphosphate, Alkyletherphosphate, Phosphate von ethoxylierten aliphatischen Alkoholen. Speziellere Carboxylate beinhalten Natriumlauroylsarcosinat und Fluortenside auf Carboxylatbasis wie z.B. Perfluornonanoat oder Perfluoroctanoat ("PFOA" oder "PFO").

Zu den beispielhaften kationischen Tensiden zählen: pH-abhängige primäre, sekundäre oder tertiäre Amine und deren Ammoniumsalze, einschließlich quaternärer Ammoniumsalze. Zu den permanent geladenen quaternären Ammoniumsalzen zählen: Cetrimoniumbromid, Cetylpyridiniumchlorid, Benzalkoniumchlorid, Benzethoniumchlorid, Dimethyldioctadecylammoniumchlorid, Dioctadecyldimethylammoniumbromid, Amine mit Amidbindungen, Polyoxyethylenalkyl- und alicyclische Amine; N,N,N',N'-Tetrakis-substituierte Ethylendiamine und 2-Alkyl-1-hydroxyethyl-2-imidazoline.

Der kationische Anteil amphoterer Tenside basiert auf primären, sekundären oder tertiären Aminen oder quarternären Ammoniumkationen. Der anionische Teil kann variabler sein und Sulfonate beinhalten, wie in den Sultainen CHAPS (3-[(3-Cholamidopropyl)dimethylammonio]-1-propan-sulfonat) und Cocamidopropyl-hydroxysultain. Betaine wie Cocamidopropyl-betain weisen ein Carboxylat mit dem Ammonium auf. Die gebräuchlichsten biologischen zwitterionischen Tenside weisen ein Phosphatanion mit einem Amin oder Ammonium auf, wie die Phospholipide Phosphatidylserin, Phosphatidylethanolamin, Phosphatidylcholin und Sphingomyeline.

In der vorliegenden Erfindung ist die Verwendung von anionischen Tensiden, wie Phosphaten von ethoxylierten aliphatischen Alkoholen, bevorzugt.

Voraussetzung für alle Additive enthaltend organische Verbindungen ist allerdings, dass die Additive sich bei der thermischen Behandlung rückstandslos zersetzen und sich nicht negativ auf die Stabilität der erfindungsgemäßen Paste auswirken.

Die Additive werden in Mengen von 0-10 Gew.-%, vorzugsweise 0 -7 Gew.-% und insbesondere 0 - 5 Gew.-% eingesetzt bezogen auf die Zusammensetzung der Silberpaste. Sofern mehrere unterschiedliche Additive eingesetzt werden ist der Gesamtanteil aller Additive bezogen auf die Silberpaste ≤ 10 Gew.-%.

Als weitere optionale Komponente (Komponente G)) kann die zusätzliche Zugabe von ein oder mehreren synthetischen Harzen (Kunstharz) erwünscht sein wie bespielweise bei der Herstellung von Siebdruckpasten, die zur Bedruckung von Abziehbildern geeignet sind. Mit der Zugabe von einem synthetischen Harz kann beispielsweise in bestimmten Anwendungen die Elastizität des Auftragsfilms verbessert werden, damit sie beim Aufbringen auf Hohlwaren oder stark gekrümmte Oberfläche nicht reißen. Geeignete synthetische Harze sind beispielsweise aus Alkyd und Phenol, Aminoplasten, Epoxiden, Polyester, Polyacrylat, Polyurethan, Polyamid, Vinyl oder Furan. Besonders bevorzugt sind Alkydharze, Polyurethanharze und Epoxyharze.

Zur Herstellung von besonders deckenden Pasten ist die Komponente G) von Bedeutung.

In einer bevorzugten Ausführungsform besteht die erfindungsgemäße Silberpaste aus den Komponenten A) bis G) und besonders bevorzugt aus den Komponenten A) bis E).

Es versteht sich von selbst, dass sich alle vorstehend genannten Gewichtsprozentsätze, wenn nicht anders angegeben, auf das Gesamtgewicht der Silberpaste beziehen.

Die vorliegende Erfindung betrifft auch ein Verfahren zur Herstellung der erfindungsgemäßen Silberpaste, das dadurch gekennzeichnet ist, dass man zwingend erforderliche und ggf. optionale Komponenten, vorzugsweise bei Raumtemperatur, innig miteinander vermischt, um eine gebrauchsfertige Silberpaste zu erhalten. Vorzugsweise wird eine Lösung des Naturharzes (Bestandteil D) hergestellt und die anderen Bestandteile, vorzugsweise gemischt mit einem Lösemittel oder Lösemittelgemisch, werden nacheinander zugegeben. Falls gewünscht oder notwendig, können auch ein oder mehrere Additive zugesetzt werden. Das Mischen erfolgt vorzugsweise mit einem Rotor-Stator-Homogenisator, einer Dreiwalzenmühle oder mit einem Speedmixer. In einigen Fällen kann Entlüftung von Bedeutung sein, abhängig von der Menge und der Art des verwendeten Lösemittels. Zum Lösen und/oder Mischen der einzelnen Komponenten kann selbstverständlich eine für das Lösemittel geeignete Temperatur angewendet werden.

Es ist ein großer Vorteil der vorliegenden Erfindung, dass das Verfahren zur Herstellung der erfindungsgemäßen Silberpaste relativ einfach ist. Das bloße Vermischen der Komponenten A) bis D) und optional die Zugabe der Komponenten E) bis G) reicht aus, um eine stabile Silberpaste zu erhalten, die eine Lagerfähigkeit von mehreren Monaten hat und in geschlossenen Behältern mindestens so lange gelagert werden kann, ohne dass Abbau oder Zersetzung der festen Bestandteile auftritt. In Abhängigkeit von dem Gehalt an Lösemitteln, Rheologiemodifizierungs-mitteln und/oder anderen Thixotropiermitteln kann die erfindungsgemäße Silberpaste in verschiedenen Beschichtungs- oder Druckverfahren einschließlich Tintenstrahldruck verwendet werden. Daher kann eine konzentrierte Form der erfindungsgemäßen Silberpaste dem Kunden zu deren Aufbringen in mehreren Beschichtungs- oder Druckverfahren dienen, da der Gehalt des Lösemittels auch zu einem späteren Zeitpunkt beim Kunden eingestellt werden kann. Ein Absetzen von Komponenten, speziell der Komponente A), ist ein für Pasten üblicher Vorgang. Für die erfindungsgemäße Paste bedeutet das allerdings keine Einschränkungen der Haltbarkeit. Aufgrund der Zusammensetzung und Stabilisierung kann die Paste durch einfaches Rühren vor Gebrauch wieder homogenisiert werden, ohne dass der Effekt dadurch negativ beieinflusst wird.

Um zu solchen Metalldekoren auf silikatischen Oberflächen wie vorstehend genannt zu gelangen, muss die erfindungsgemäße Silberpaste auf eine Oberfläche eines Gegenstands aufgebracht und anschließend weiter behandelt werden.

Daher betrifft die vorliegende Erfindung auch ein Verfahren zur Herstellung einer metallhaltigen Beschichtung auf einem Substrat, wobei die erfindungsgemäße Silberpaste auf ein Substrat aufgebracht und anschließend bei einer Temperatur von 400 - 900 °C, vorzugsweise 500 - 850 °C, und insbesondere 550 - 800 °C, behandelt wird. Die Behandlung wird vorzugsweise in einer sauerstoffhaltigen Atmosphäre durchgeführt. Die Brenntemperatur richtet sich im wesentlichen nach der zu beschichtenden Oberfläche und dem Erweichungspunkt des zu dekorierenden Gegenstandes. Nach oben hin ist die Temperatur durch den Schmelzpunkt der Komponente A) bestimmt.

Das Substrat mit der silikatischen Oberfläche ist gemäß der vorliegenden Erfindung vorzugsweise ein Gegenstand, der eine Oberfläche aus Porzellan, Knochenporzellan, Keramik, Glas oder Emaille aufweist. Die Art des Gegenstandes ist an sich nicht beschränkt. Im Prinzip können alle Gegenstände verwendet werden, deren Dekor oder Funktion dadurch bereichert werden kann, dass sie eine metallische Schicht bzw. ein Dekor oder eine Beschriftung hergestellt mit Hilfe der erfindungsgemäßen Silberpaste auf ihrer Oberfläche aufweisen. Beispiele sind Kacheln, architektonische Elemente, Gläser und Porzellan für den privaten oder gewerblichen Gebrauch und dergleichen.

Die erfindungsgemäße Silberpaste kann entweder direkt oder mittels eines Transfermediums auf die Oberfläche des Substrats aufgebracht werden.

Das direkte Aufbringen kann nach jedem dem Fachmann bekannten Verfahren erfolgen. Die erfindungsgemäße Silberpaste kann durch Eintauchen des Substrats in die aufzubringende Silberpaste oder durch ein beliebiges Beschichtungs- oder Druckverfahren wie Vorhangbeschichten, Walzenbeschichten, Schleuderbeschichten, Imprägnieren, Gießen, Auftropfen, Spritzen, Aufsprühen, Rakelbeschichten, Bemalen oder Bedrucken auf das Substrat aufgebracht werden, wobei das Bedrucken ein Tintenstrahldruck-, Siebdruck-, Tiefdruck-, Offsetdruck- oder Tampondruckverfahren sein kann und das Malverfahren ein Stiftmal-, Pinselmal- oder ähnliches Verfahren sein kann.

Das Beschichtungsverfahren wird abhängig von der Art des Substrats und der Größe und Art der Beschichtung, die auf das Substrat aufgebracht werden soll, gewählt. Es versteht sich von selbst, dass die Viskosität der erfindungsgemäßen Silberpaste an die erforderliche Beschichtungstechnik angepasst werden muss. Da die Viskosität der erfindungsgemäßen Silberpaste in der Regel durch Ändern der Menge des jeweiligen Lösemittels bzw. Lösemittelgemisches einstellbar ist, kann eine konzentrierte Silberpaste gemäß der vorliegenden Erfindung als Basiszusammensetzung zur Verwendung in mehr als einer Aufbringtechnik verwendet werden.

Bevorzugte Druckverfahren sind Siebdruck, Tiefdruck, Tampondruck und Tintenstrahldruck. Vorteilhaft kann auch ein Bemalen mit einem Pinsel oder Stift, sowie das Rändern mittels Kupferrad verwendet werden.

Das Aufbringen der Silberpaste auf das Substrat kann auch durch Einsatz eines indirekten Verfahrens erfolgen, d.h. durch Aufbringen der anzuwendenden Silberpaste auf ein Transfermedium in einem ersten Schritt und, in einem zweiten Schritt, Aufbringen der Silberpaste auf das Substrat mittels des Transfermediums, das mit einer Silberpaste gemäß der vorliegenden Erfindung vorbeschichtet ist. Hierbei kann die Silberpaste über ein Druckverfahren, wie Siebdruck, Tintenstrahldruck, Tampondruck oder Offsetdruck, auf das Transfermedium aufgebracht werden.

Das Transfermedium kann aus einem Polymer- oder Papierträger bestehen, z.B. in Form eines Abziehbildes, der mit der erfindungsgemäßen Silberpaste vorbeschichtet und getrocknet wird. Die erfindungsgemäße Silberpaste wird dann auf das Substrat aufgebracht, indem man den vorbeschichteten Träger auf dem Substrat positioniert und den Polymer- oder Papierträger entfernt. Die thermische Behandlung erfolgt in diesem Fall nach dem Aufbringen der Silberpaste auf das Substrat, nicht nach dem Aufbringen der Silberpaste auf den Polymer- oder Papierträger.

Das Substrat kann eine beliebige Form aufweisen, die das Aufbringen der anzuwendenden Silberpaste auf das Substrat erlaubt. Flache, zweidimensionale Substrate wie Filme, Platten und Folien sind ebenso nützlich wie dreidimensionale Substrate mit einer beliebigen Form wie einer Kugel- oder einer Kegel- oder einer beliebigen anderen zweckdienlichen dreidimensionalen Form. Das Substrat kann ein kompakter oder hohler Körper mit einer äußeren und/oder inneren glasierten Oberfläche auf Porzellan, Knochenporzellan, Keramik, Glas oder Emaille sein, der mit einer Silberpaste der vorliegenden Erfindung bedeckt oder beschriftet werden soll.

Die silikatische Oberfläche des Substrats umfasst vorzugsweise mindestens eine zusammenhängende Fläche, auf welche die erfindungsgemäße Silberpaste aufgebracht werden kann. Die mit der Silberpaste bedeckte Fläche kann eine beliebige geeignete Form haben, in Form von regelmäßigen oder unregelmäßigen Mustern, Linien, geometrischen Formen wie Kreisen, Quadraten, Rechtecken und dergleichen, Fotografien, Logos, Strichcodes usw. Größe und Form der mit der Silberpaste bedeckten Substratfläche sind lediglich durch die Art des verwendeten Beschichtungs- oder Druckverfahrens und/oder durch die geometrische Form des Substrats selbst begrenzt. Bei porösen und saugenden keramischen Körper ist es zweckmäßig, vor der Dekoration ein Glasur aufzubringen. Das vorliegende Beschichtungsverfahren erlaubt die Herstellung von Mustern mit sehr feinen Liniendurchmessern.

Die Größe der beschichteten Fläche liegt in der Regel im Bereich von 0,5 mm² bis 10 m², insbesondere von 10 mm² bis 5 m² und insbesondere bevorzugt im Bereich von 100 mm² bis 1 m². Möglich sind auch Liniendurchmesser von 0,01 mm bis 10 cm, insbesondere von 0,1 mm bis 1 cm.

Das Substrat, auf dem sich die feste Dekorationsschicht befindet, ist ein Gegenstand, der eine äußere silikatische Oberfläche aufweist, bei der es sich beispielsweise um eine Oberfläche aus Porzellan, Knochenporzellan, Keramik, Glas oder Emaille handelt. Es versteht sich von selbst, dass der gesamte Gegenstand aus einem der vorstehend genannten Materialien bestehen kann, aber Gegenstände, die lediglich eine silikatische Oberfläche aufweisen, wobei der Körper des Gegenstandes aus einem anderen Material besteht, sollen ebenfalls Teil der vorliegenden Erfindung sein. Natürlich müssen die Oberfläche des Gegenstandes sowie sein Körper der Temperatur der thermischen Behandlung bei 400 - 900 °C standhalten. Form und Größe des Artikels selbst unterliegen keiner Beschränkung. Die silikatische Oberfläche kann entweder eine äußere Oberfläche oder eine innere Oberfläche des Gegenstandes sein (z.B. für hohle Gegenstände).

Der Gehalt der Glasmatrix beträgt vorzugsweise 15 - 45 Gew.-%, insbesondere 20 - 40 Gew.-%, bezogen auf das Gesamtgewicht der festen Beschichtung. Somit beträgt der Gehalt der Silbernanoteilchen in der metallteilchenhaltigen festen Beschichtung auf dem Substrat vorzugsweise 40-80 Gew.-%, insbesondere bevorzugt im Bereich 50 - 70 Gew.-% des Gesamtgewichts der festen Beschichtung. Sofern die feste Beschichtung noch weitere Metalle enthält, so liegt deren Gehalt im Bereich von 0-10 Gew.-% bezogen auf die feste Beschichtung.

Insbesondere bevorzugt ist die Ausführungsform, wobei die feste Beschichtung auf einem Substrat lediglich Silberteilchen oder eine silberhaltige Legierung mit einem Silbergehalt von mindestens 50 Gew.-%, bezogen auf das Gewicht der Legierung, und eine umhüllende Glasmatrix enthält.

Sobald die Pasten gebrannt sind, lässt sich die Stabilität gegen Oxidation anhand von Prüfnormen testen. Hierfür wird die Norm ISO 4538-1978 (E) herangezogen.

Die vorliegende Erfindung wird durch die nachfolgenden Beispiele, auf die sie jedoch nicht beschränkt sein soll, näher erläutert.

### Beispiele

### Beispiel 1

Eine Harzlösung hergestellt aus 50 % Dymerex^{™} (Kolophoniumharz der Fa. Eastman) und 50 % 1-Methoxy-2-propanol wird als Bindemittel eingesetzt.

3 g der obigen Lösung werden vorgelegt. Anschließend gibt man 4 g einer Paste aus Silbernanopartikeln (D₅₀ = 70 nm, D₉₀ = 115 nm, in Ethanol, Feststoffgehalt 45%, Fa. NanoComposix), 2 g einer Polymermischung (Dowsil^{™} Fluid 593: Polydimethylsiloxan/Silikonharz-Gemisch, Fa. Dow Chemicals), 0,1 g Platinum resinate MR7801-P (Fa. Alfa Chemistry), 0,2 g Bismuth(III) 2-ethylhexanoat (Fa. ABCR) und 0,7 g 1-Methoxy-2-propanol dazu. Die entstandene Mischung wird bis zur Homogenität gerührt.

Die so erhaltene Silberpaste, welche sich besonders für die Pinselapplikation eignet, wird nun mittels Pinselauftrag auf ein Glas aufgebracht. Nach dem Trocknen wird das dekorierte Glas bei 560 °C für 30 Minuten gebrannt. Auf diese Weise erhält man eine besonders glänzende, dunkle platinartige Dekoration auf der Glasoberfläche.

### Beispiel 2

Eine Harzlösung hergestellt aus 70 % Dymerex^{™} (Kolophoniumharz der Fa. Eastman) und 30 % Dowanol DPM (Dipropylenglykolmonomethylether) wird als Bindemittel eingesetzt. 4 g der obigen Lösung werden vorgelegt. Anschließend gibt man 4 g einer Paste aus Silbernanopartikeln (D₅₀ = 70 nm, D₉₀ = 115 nm, in Ethanol, Feststoffgehalt 45%, NanoSaar AG), 1 g einer Polymermischung (Dowsil^{™} Fluid 593: Polydimethylsiloxan/Silikonharz-Gemisch, Fa. Dow Chemicals), 0,1 g Platinum resinate MR7801-P (Fa. Alfa Chemistry), 0,2 g Bismuth(III) 2-ethylhexanoat (Fa. ABCR) und 0,7 g 1-Methoxy-2-propanol dazu. Die entstandene Mischung wird bis zur Homogenität gerührt.

Die so erhaltene zähflüssige Silberpaste, welche sich zum Drucken eignet, wird nun auf ein Glas aufgebracht. Nach dem Trocknen wird das dekorierte Glas bei 560 °C für 30 Minuten gebrannt. Auf diese Weise erhält man eine glänzende, platinartige Dekoration auf der Glasoberfläche.

### Beispiel 3

Eine Harzlösung, hergestellt aus 60 % Poly-Pale^{™} (partiell dimerisiertes Kolophoniumharz der Fa. Eastman) und 40 % Terpineol, wird als Bindemittel eingesetzt. 4 g der obigen Lösung werden vorgelegt. Anschließend gibt man 4 g einer Paste aus Silbernanopartikeln (D₅₀ = 70 nm, D₉₀ = 115 nm, in DPM , Feststoffgehalt 45%, Fa. DOWA Electronics Materials Co., Ltd. ), 1 g einer Polymermischung (DX175 von Shin-Etsu), 0,1 g Platinum resinate (Fa. Fuji), 0,2 g Bismuth(III) 2-ethylhexanoat und 0,7 g 1-Methoxy-2-propanol dazu. Die entstandene Mischung wird bis zur Homogenität gerührt.

Die erhaltene Metallpaste wird nun mittels Siebdruck auf ein Glas aufgebracht. Nach dem Trocknen wird das dekorierte Glas bei 560 °C für 30 Minuten gebrannt. Auf diese Weise erhält man eine seidenmatte, platinartige Dekoration.

### Beispiel 4

Eine Harzlösung, hergestellt aus 50 % Poly-Pale^{™} (Partiell dimerisiertes Kolophoniumharz, Fa. Eastman) und 50 % Terpineol, wird als Bindemittel eingesetzt. 4 g der obigen Lösung werden vorgelegt. Anschließend gibt man 4 g einer Paste aus Silbernanopartikeln (D₅₀ = 70 nm, D₉₀ = 115 nm, in DPM, Feststoffgehalt 45%, Fa. DOWA Electronics Materials Co., Ltd.), 2 g einer Polymermischung RHODORSIL HARZ 6405 X (Methylphenyl-Silikonharz der Fa. Bluestar Silicones), 0,1 g Palladium resinate (Alfa Chemistry), 0,2 g Bismuth(III) 2-ethylhexanoat und 0,7 g 1-Methoxy-2-propanol dazu. Die entstandene Mischung wird bis zur Homogenität gerührt.

Die entstandene Silberpaste, welche besonders für Siebdruck geeignet ist, wird nun mittels Siebdruck auf ein Glas aufgebracht werden. Nach dem Trocknen wird das dekorierte Glas bei 560 °C für 30 Minuten gebrannt. Auf diese Weise erhält man eine glänzende, weißgoldartige Dekoration.

### Beispiel 5

Eine Harzlösung, hergestellt aus 50 % Balsamharz (Fa. TER Chemicals) und 50 % 1-Methoxy-2-propanol, wird als Bindemittel eingesetzt. 4 g der obigen Lösung werden vorgelegt. Anschließend gibt man 4 g einer Paste aus Silbernanopartikeln (D₅₀ = 70 nm, D₉₀ = 115 nm, in Terpineol, Feststoffgehalt 50 %, Fa. PV Nanocell), 2 g einer Polymermischung (Dowsil^{™} Fluid 593: Polydimethylsiloxan/Silikonharz-Gemisch (Fa. Dow Chemicals), 0,1 g Platinum resinate MR7801-P (BOC Science) dazu. Die entstandene Mischung wird bis zur Homogenität gerührt.

Die entstandene Paste, welche besonders für die Siebdruck geeignet ist, kann nun auf ein Glas aufgebracht werden. Nach dem Trocknen wird das dekorierte Glas bei 600 °C für 30 Minuten gebrannt. Auf diese Weise erhält man eine beonders glänzende, sehr helle platinartige Dekoration.

### Beispiel 6

Eine Harzlösung, hergestellt aus 50 % Gum-Rosin (Sigma-Aldrich) und 50 % 1-Methoxy-2-propanol, wird als Bindemittel eingesetzt. 4 g der obigen Lösung werden vorgelegt. Anschließend gibt man 4 g einer Paste aus Silbernanopartikeln (D₅₀ = 70 nm, D₉₀ = 115 nm, in Terpineol, Feststoffgehalt 50 %, Fa. DOWA Electronics Materials Co., Ltd.), 2 g einer Polymermischung (Dowsil^{™}2502, Cetyl Dimethicone, Fa. Dow Chemicals), 0,1 g Palladium resinate (Fa. Daiken) dazu. Die entstandene Mischung wird bis zur Homogenität gerührt.

Die entstandene Paste kann nun mittels Siebdruck, Sprühen oder Pinselauftrag auf ein Glas aufgebracht werden. Nach dem Trocknen wird das dekorierte Glas bei 560 °C für 30 Minuten gebrannt. Auf diese Weise erhält man eine glänzende, dunkle weißgoldartige Dekoration.

### Beispiel 7

Eine Harzlösung, hergestellt aus 60 % Balsamharz (TER Chemicals) und 40 % 1-Methoxy-2-propanol, wird als Bindemittel eingesetzt.

4 g der obigen Lösung werden vorgelegt. Anschließend gibt man 4 g einer Paste aus Silbernanopartikeln (D₅₀ = 70 nm, D₉₀ = 115 nm, in Terpineol, Feststoffgehalt 50 %, Fa. PV Nanocell), 2 g einer Polymermischung (DowSil 593), 0,1 g Au resinate (Hereaus) dazu. Die entstandene Mischung wird bis zur Homogenität gerührt.

Die entstandene Silberpaste wird nun mittels Siebdruck, Sprühen oder Pinselauftrag auf ein Glas aufgebracht. Nach dem Trocknen wird das dekorierte Glas bei 560 °C für 30 Minuten gebrannt. Auf diese Weise erhält man eine seidenmatte, weißgoldartige Dekoration.

### Beispiel 8

Eine Harzlösung, hergestellt aus 50 % Gum Rosin (Sigma-Aldrich) und 50 % Terpineol wird als Bindemittel eingesetzt. 4 g der obigen Lösung werden vorgelegt. Anschließend gibt man 4 g einer Paste aus Silbernanopartikeln (D₅₀ = 70 nm, D₉₀ = 115 nm, in TPM, Feststoffgehalt 50 %, Fa. Seashell Technology, LLC), 2 g einer Polymermischung Silres^{®} HK46 (Methylsilikonharz, Fa. Wacker), 0,1 g Platinum resinate MR7801-P (Fa. Alfa Chemistry) dazu. Die entstandene Mischung wird bis zur Homogenität gerührt.

Die entstandene Silberpaste, welche besonders für Siebdruck geeignet ist, wird nun mittels Siebdruck, Sprühen oder Pinselauftrag auf ein Glas aufgebracht. Nach dem Trocknen wird das dekorierte Glas bei 620 °C für 30 Minuten gebrannt. Auf diese Weise erhält man eine glänzende, äußerst widerstandsfähige platinartige Dekoration.

### Beispiel 9

Eine Harzlösung, hergestellt aus 50 % BREMAR 6091 (Robert Kraemer GmbH) und 50 % 1-Methoxy-2-propanol, wird als Bindemittel eingesetzt. 4 g der obigen Lösung werden vorgelegt. Anschließend gibt man 4 g einer Paste aus Silbernanopartikeln (D₅₀ = 70 nm, D₉₀ = 115 nm, in Terpineol, Feststoffgehalt 50 %, Fa. PV Nanocell), 3 g einer Polymermischung Durazane 1066 (Silikonharz, Fa. Merck KGaA), 0,1 g Platinum resinate MR7801-P (Fa. Alfa Chemistry) dazu. Die entstandene Mischung wird bis zur Homogenität gerührt.

Die entstandene Paste wird nun mittels Siebdruck, Sprühen oder Pinselauftrag auf ein Glas aufgebracht werden. Nach dem Trocknen wird das dekorierte Glas bei 560 °C für 30 Minuten gebrannt. Auf diese Weise erhält man eine besonders kratzfeste, glänzende, platinartige Dekoration.

Die Dekorationen der Beispiele 1-9 sind H₂S-beständig, oxidationsstabil und zeigen keine Vergrauung nach der Norm ISO 4538-1978 (E). Je nach Atmosphäre ist das Dekor dann für viele Jahre stabil.

### Beispiel 10

Es werden 40 g Cyclohexanon bei einer Temperatur vom 120 °C erhitzt. Unter Rührern wird 20 g von SYNOLAC^{®} 3132 X 75 von der Fa. Arkema und 40 g von Rosin WW (Fa. TER Chemicals) hinzu gegeben, bis alles gut aufgelöst ist. Eine klare braune Lösung wird nach Abkühlung auf Raumtemperatur sichtbar.

Es wird 30 g von dieser Harzlösung entnommen und mit 10 g Durazen 1800 (Polysilazan der Fa. Merck), 1 g Bismuth (III) 2-Ethylhexanoate, 0,5 g 10 % Calcium Cem-All (Borchers), 40 g Ag Nano-Particles (D₅₀ = 70 nm, D₉₀ = 115 nm, in TPM (50% Feststoffanteil in Tripropylene glycol monomethyl ether), 18,5 g Harzlösung aus Beispiel 2 versetzt. Nach kurzem Rührern wird diese Mischung in einer Dreiwalzenmühle homogenisiert. Die so hergestellte Druckpaste wird direkt mit Hilfe eines Siebdruckverfahrens (150/31 Polyester) auf Transferpapier gedruckt und später mit Lack L406 der Fa. Ferro überdruckt und nach Trocknung auf ein Glas appliziert und bei einer Temperatur von 580 °C eingebrannt. Man erhält einen Platin-ähnlichen Farbton.

### Beispiel 11

Zu 12 g 3-(Trimethoxysilyl)propylmethacrylat der Fa. Aldrich werden langsam unter Rühren 21 g Dowanol DPM (Dipropylenglykolmonomethylether) und 10 g Terpineol hinzugegeben.

Unter Rühren wird auf 120 °C erhitzt, danach erfolgt die Zugabe von 50 g Poly-Pale Rosin (Fa. Eastman) bis alle Harzteile gelöst sind. Weitere Zugabe von 3 g Goldresinate MR 7901-P (Fa. Fuji), und 3 g Palladium Resinate MR 4601-P (Fa. Fuji). Die ganze Lösung wird 3 Stunden gerührt bis alle Resinate aufgelöst sind. Danach erfolgt die Zugabe von 1 g Cobalt (II) 2-ethylhexanoat-Lösung ("12% Co HexCem" von Fa. Borchers).

Diese Mischung wird in einem Walzenstuhl homogenisiert. Mit Hilfe eines Siebdruckverfahrens (150/31 Polyester) wird diese Paste auf Transferpapier gedruckt und in der Luft trocknen gelassen. Danach erfolgt ein Überdrucken mit einem Lack, wie z. B. L406 der Fa. Ferro. Nach dem Aufbringen auf ein Glas wird bei einer Temperatur von 560 °C eingebrannt. Man erhält einen Platinfarbton.

### Beispiel 12

Eine Harzlösung hergestellt aus 60 % Gum Rosin (Sigma-Aldrich) und 40 % Terpineol wird als Bindemittel eingesetzt. 4 g der obigen Lösung werden vorgelegt. Anschließend gibt man 3,5 g einer Paste aus Silbernanopartikeln (D₅₀ = 70 nm, D₉₀ = 115 nm, in Terpineol, Feststoffgehalt 50 %, Fa. PV Nanocell), 2 g einer Polymermischung (Dowsil^{™} Fluid 593: Polydimethylsiloxan/Silikonharz-Gemisch (Fa. Dow Chemicals), 0,2 g Palladium-Resinate-Lösung (MR4601-P, Fa. Wako Chemicals, w=15 % in Terpineol) und 0,25 g einer 50 %igen Lösung von Kupferresinat (Fa. Kremer Pigmente) in Terpineol dazu. Die entstandene Mischung wird bis zur Homogenität gerührt.

Die erhaltene Silberpaste, welche besonders für Siebdruck geeignet ist, wird nun mittels Siebdruck, Sprühen oder Pinselauftrag auf ein Glas aufgebracht. Nach dem Trocknen wird das dekorierte Glas bei 620 °C für 30 Minuten gebrannt. Auf diese Weise erhält man eine glänzende, widerstandsfähige, sehr helle, platinartige Dekoration.

## Patentansprüche

1. Silberpaste enthaltend
A) 10 bis 40 Gew.-% Nanoteilchen aus Silber oder einer silberhaltigen Legierung, wobei die Nanoteilchen einen D₅₀-Wert, gemessen mit dem volumenbezogenen Laserbeugungsverfahren, im Bereich von 30 bis 300 nm aufweisen,
B) 10 bis 30 Gew.-% mindestens einer organischen Verbindung enthaltend Silizium,
C) 30 bis 70 Gew.-% Lösemittel oder eines Lösemittelgemisches,
D) 15 bis 35 Gew.-% mindestens eines Naturharzes,
E) 0 bis 5 Gew.-% mindestens einer organischen Metall-, Erdalkalimetall- oder Alkalimetall-Verbindung, wobei das chemische Element ausgewählt ist aus der Gruppe Ag, Au, Bi, Ca, Co, Cr, Cu, Fe, Ir, K, Mg, Mn, Na, Nb, Ni, Os, Pd, Pt, Os, Rh, Ru, Sn, Ti, W, V, Zn, Zr,
F) 0 bis 10 Gew.% eines oder mehrerer Additive
G) 0 bis 10 Gew.% mindestens eines Kunstharzes
wobei sich die Prozentangaben auf das Gesamtgewicht der Silberpaste beziehen und 100 % ergeben.

2. Silberpaste nach Anspruch 1, **dadurch gekennzeichnet, dass** die eingesetzten Silbernanopartikel monodispers sind.

3. Silberpaste nach Anspruch 1 oder 2, **dadurch gekennzeichnet,**
**dass** die eingesetzten Silbernanopartikel stabilisiert sind.

4. Silberpaste nach mindestens einem der Ansprüche 1 bis 3, **dadurch gekennzeichnet, dass** die organische Verbindung der Komponente B) ausgewählt ist aus der Gruppe Polysilazane, Polysiloxane, Silikone, silikonmodifizierten Alkydharze, Silikonpolyesterharze, Polysilsesquioxane, Polysilane, Polysilanole oder deren Derivate sowie Gemische der genannten organischen Verbindungen und Polymere.

5. Silberpaste nach einem oder mehreren der Ansprüche 1 bis 4, wobei das Lösemittel ausgewählt ist aus der Gruppe Alkohole, aromatische Lösemittel, Ketone, Ester, Ether, Etheralkohole, gesättigte und ungesättigte aliphatische Kohlenwasserstoffe oder Amide oder deren Gemische.

6. Silberpaste nach einem oder mehreren der Ansprüche 1 bis 5, wobei das Naturharz ausgewählt ist aus der Gruppe nicht hydrierte, partiell und/oder vollständig hydrierte Kolophonium basierende Harze, nicht hydrierte, partiell und/oder vollständig hydrierte Kolophoniumester basierende Harze, nicht hydrierte, partiell und/oder vollständig hydrierte Rohtallöl basierende Harze, nicht hydrierte, partiell und/oder vollständig hydrierte Rohtallölester basierende Harze, Terpen basierende Harze und/oder deren jeweilige Derivate sowie Gemische der genannten Harze.

7. Silberpaste nach einem oder mehreren der Ansprüche 1 bis 6, **dadurch gekennzeichnet, dass** Metallverbindung der Komponente E) ausgewählt ist aus der Gruppe Acetate, Resinate, Sulforesinate, Mercaptide,Thiolate, Carboxylate, Ethylhexanoate und Alkoholate.

8. Silberpaste nach einem oder mehreren der Ansprüche 1 bis 7, **dadurch gekennzeichnet, dass** das Additiv der Komponente F) ausgewählt ist aus der Gruppe Thixotropiemittel, Verlaufsmittel, Dispergiermittel, Rheologiemodifizierungsmittel, Entschäumer, Tenside, Füllstoffe, Farbstoffe.

9. Silberpaste nach einem oder mehreren der Ansprüche 1 bis 8, **dadurch gekennzeichnet, dass** die Komponente G) ein synthetisches Harz ist ausgewählt aus der Gruppe Phenol, Aminoplaste, Epoxyd, Polyester, Polyacrylat, Alkyd, Polyurethan, Polyamid, Vinyl und Furan.

10. Verfahren zur Herstellung einer Silberpaste nach einem oder mehreren der Ansprüche 1 bis 9, **dadurch gekennzeichnet, dass** man alle Komponenten A) bis G) innig miteinander vermischt und eine gebrauchsfertige Silberpaste erhält.

11. Verfahren nach Anspruch 10, **dadurch gekennzeichnet, dass** das Mischen unter Einsatz eines Rotor-Stator-Homogenisators, einer Dreiwalzenmühle oder eines Speedmixers erfolgt.

12. Verwendung einer Silberpaste nach einem oder mehreren der Ansprüche 1 bis 9 zur Herstellung von Beschichtungen, Dekorelementen und Beschriftungen auf Gegenständen, die eine Oberfläche aus Porzellan, Knochenporzellan, Keramik, Glas oder Emaille aufweisen.

## Claims

1. Silver paste comprising
A) 10 to 40% by weight of nanoparticles comprising silver or a silver-containing alloy, where the nanoparticles have a D₅₀ value, measured using the volume-based laser diffraction process, of 30 - 300 nm,
B) 10 to 30% by weight of at least one organic compound containing silicon,
C) 30 to 70% by weight of a solvent or solvent mixture,
D) 15 to 35% by weight of at least one natural resin,
E) 0 to 5% by weight of at least one organic metal, alkaline-earth metal or alkali metal compound, where the chemical element is selected from the group Ag, Au, Bi, Ca, Co, Cr, Cu, Fe, Ir, K, Mg, Mn, Na, Nb, Ni, Os, Pd, Pt, Rh, Ru, Sn, Ti, W, V, Zn, Zr,
F) 0 to 10% by weight of one or more synthetic additives,
G) 0 to 10% by weight of at least one synthetic resin,
where the per cent data are based on the total weight of the silver paste and add up to 100%.

2. Silver paste according to Claim 1, **characterised in that** the silver nanoparticles employed are monodisperse.

3. Silver paste according to Claim 1 or 2, **characterised in that** the silver nanoparticles employed have been stabilised.

4. Silver paste according to at least one of Claims 1 to 3, **characterised in that** the organic compound of component B) is selected from the group polysilazanes, polysiloxanes, silicones, silicone-modified alkyd resins, silicone polyester resins, polysilsesquioxanes, polysilanes, polysilanols or derivatives thereof and mixtures of the said organic compounds and polymers.

5. Silver paste according to one or more of Claims 1 to 4, where the solvent is selected from the group alcohols, aromatic solvents, ketones, esters, ethers, ether alcohols, saturated and unsaturated aliphatic hydrocarbons or amides or mixtures thereof.

6. Silver paste according to one or more of Claims 1 to 5, where the natural resin is selected from the group unhydrogenated, partially hydrogenated and/or fully hydrogenated resins based on colophony, unhydrogenated, partially hydrogenated and/or fully hydrogenated resins based on colophony esters, unhydrogenated, partially hydrogenated and/or fully hydrogenated resins based on crude tall oil, unhydrogenated, partially hydrogenated and/or fully hydrogenated resins based on crude tall oil esters, terpene-based resins and/or the respective derivatives thereof and mixtures of the said resins.

7. Silver paste according to one or more of Claims 1 to 6, **characterised in that** the metal compound of component E) is selected from the group acetates, resinates, sulforesinates, mercaptides, thiolates, carboxylates, ethylhexanoates and alcoholates.

8. Silver paste according to one or more of Claims 1 to 7, **characterised in that** the additive of component F) is selected from the group thixotropic agents, flow-control agents, dispersants, rheology modifiers, antifoams, surfactants, fillers and dyes.

9. Silver paste according to one or more of Claims 1 to 8, **characterised in that** component G) is a synthetic resin selected from the group phenolic, amino, epoxy, polyester, polyacrylate, alkyd, polyurethane, polyamide, vinyl and furan resins.

10. Process for the preparation of a silver paste according to one or more of Claims 1 to 9, **characterised in that** all components A) to G) are intimately mixed with one another, giving a ready-to-use silver paste.

11. Process according to Claim 10, **characterised in that** the mixing is carried out using a rotor-stator homogeniser, a triple roll mill or a SpeedMixer.

12. Use of a silver paste according to one or more of Claims 1 to 9 for the production of coatings, decoration elements and inscriptions on articles having a porcelain, bone china, ceramic, glass or enamel surface.

## Revendications

1. Pâte d'argent, comprenant
A) de 10 à 40% en poids de nanoparticules comprenant de l'argent ou un alliage à base d'argent, où les nanoparticules présentent une valeur de D₅₀, mesurée en utilisant le procédé de diffraction laser basé sur le volume, de 30 - 300 nm,
B) de 10 à 30% en poids d'au moins un composé organique contenant du silicium,
C) de 30 to 70% en poids d'un solvant ou d'un mélange de solvants,
D) de 15 to 35% en poids d'au moins une résine naturelle,
E) de 0 à 5% en poids d'au moins un composé organométallique, de métal alcalino-terreux ou de métal alcalin, où l'élément chimique est choisi dans le groupe constitué par Ag, Au, Bi, Ca, Co, Cr, Cu, Fe, Ir, K, Mg, Mn, Na, Nb, Ni, Os, Pd, Pt, Rh, Ru, Sn, Ti, W, V, Zn, Zr,
F) de 0 à 10% en poids d'un ou plusieurs additifs synthétiques,
G) de 0 à 10% en poids d'au moins une résine synthétique,
où les données en pourcentage sont basées sur le poids total de la pâte d'argent et totalisent 100%.

2. Pâte d'argent selon la revendication 1, **caractérisée en ce que** les nanoparticules d'argent employées sont monodispersées.

3. Pâte d'argent selon la revendication 1 ou 2, **caractérisée en ce que** les nanoparticules d'argent employées ont été stabilisées.

4. Pâte d'argent selon au moins l'une parmi les revendications 1 à 3, **caractérisée en ce que** le composé organique du composant B) est choisi dans le groupe constitué par les polysilazanes, les polysiloxanes, les silicones, les résines alkydes à modification silicone, les résines polyester-silicone, les polysilsesquioxanes, les polysilanes, les polysilanols ou des dérivés de ceux-ci et des mélanges desdits composés organiques et de polymères.

5. Pâte d'argent selon l'une ou plusieurs parmi les revendications 1 à 4, dans laquelle le solvant est choisi dans le groupe constitué par les alcools, les solvants aromatiques, les cétones, les esters, les éthers, les alcools-éthers, les hydrocarbures aliphatiques saturés et insaturés ou les amides ou des mélanges de ceux-ci.

6. Pâte d'argent selon l'une ou plusieurs parmi les revendications 1 à 5, dans laquelle la résine naturelle est choisie dans le groupe constitué par les résines non hydrogénées, partiellement hydrogénées et/ou totalement hydrogénées à base de colophane, les résines non hydrogénées, partiellement hydrogénées et/ou totalement hydrogénées à base d'esters de colophane, les résines non hydrogénées, partiellement hydrogénées et/ou totalement hydrogénées à base de tallöl brut, les résines non hydrogénées, partiellement hydrogénées et/ou totalement hydrogénées à base d'esters de tallöl brut, les résines à base de terpènes et/ou des dérivés respectifs de ceux-ci et des mélanges desdites résines.

7. Pâte d'argent selon l'une ou plusieurs parmi les revendications 1 à 6, **caractérisée en ce que** le composé de métal du composant E) est choisi dans le groupe constitué par les acétates, les résinâtes, les sulforésinates, les mercaptides, les thiolates, les carboxylates, les éthylhexanoates et les alcoolates.

8. Pâte d'argent selon l'une ou plusieurs parmi les revendications 1 à 7, **caractérisée en ce que** l'additif du composant F) est choisi dans le groupe constitué par les agents thixotropes, les agents de contrôle de l'écoulement, les dispersants, les modificateurs de rhéologie, les agents antimousse, les agents tensioactifs, les charges et les colorants.

9. Pâte d'argent selon l'une ou plusieurs parmi les revendications 1 à 8, **caractérisée en ce que** le composant G) est une résine synthétique choisie dans le groupe constitué par les résines phénoliques, amino, époxy, polyester, polyacrylate, alkydes, polyuréthane, polyamide, vinyliques et furanique.

10. Procédé de préparation d'une pâte d'argent selon l'une ou plusieurs parmi les revendications 1 à 9, **caractérisé en ce que** tous les composants A) à G) sont mélangés intimement les uns avec les autres, pour conduire à une pâte d'argent prête à l'emploi.

11. Procédé selon la revendication 10, **caractérisé en ce que** le mélange est effectué à l'aide d'un homogénéisateur rotor-stator, d'un broyeur à trois cylindres ou d'un SpeedMixer.

12. Utilisation d'une pâte d'argent selon l'une ou plusieurs parmi les revendications 1 à 9, pour la production de revêtements, d'éléments de décoration et d'inscriptions sur des articles ayant une surface en porcelaine, en porcelaine tendre, en céramique, en verre ou en émail.
